# EUROPEAN PATENT SPECIFICATION

(11) **EP 3 736 886 B1**
(45) Date of publication and mention of the grant of the patent: **01.11.2023**
(21) Application number: 20173699.8
(22) Date of filing: 08.05.2020
(51) Int. Cl.: H01M 4/62, H01M 4/131, C08F 18/08, C08F 20/04, C08F 20/06, C08F 20/12, C08F 20/26, C08F 20/44, C08F 20/56, H01M 4/505, H01M 4/525, C08F 2/22, C08F 293/00, C08F 2/44, C08F 265/06, C08F 285/00, H01M 10/0525, C08F 265/10

(54) **AQUEOUS BINDER AND PREPARATION METHOD THEREOF**
WÄSSRIGES BINDEMITTEL UND VERFAHREN ZU SEINER HERSTELLUNG
LIANT AQUEUX ET SON PROCÉDÉ DE PRÉPARATION

(30) Priority: 09.05.2019 CN 201910385073
(43) Date of publication of application: 11.11.2020
(73) Proprietor: Fujian Blue Ocean & Black Stone Technology Co., Ltd., Zhangzhou City, Fujian Province 363900 (CN)
(72) Inventor: LUO, Hebin, Zhangzhou City, Fujian Province 363900 (CN); BAI, Fengrui, Zhangzhou City,, Fujian Province 363900 (CN)
(74) Representative: Franco Martegani S.r.l.

(56) References cited:
- CN-A- 108 598 486
- US-A1- 2016 260 976

## Description

### FIELD OF THE INVENTION

The present invention relates to the technical field of lithium-ion battery materials, in particular to an aqueous binder for a ternary material of a lithium-ion battery, and a preparation method thereof.

### BACKGROUND OF THE INVENTION

Lithium-ion batteries are the new generation of the secondary batteries with a rapidly development in the 1990s, which are widely used in small portable electronic communication products and electric vehicles. The performance of battery materials is a core link in the lithium battery industry. Battery materials are divided into positive electrode material, negative electrode material, separator, electrolyte, etc. The positive electrode material is one of the key materials for manufacturing lithium -ion batteries, accounting for more than 25% of the battery cost, and its performance directly affects various performance indexes of the battery.

With the rapid development of lithium ion batteries, the current requirements are to prepare lithium ion batteries with lighter and higher energy density. In order to improve the energy density of the batteries, except for the optimization of manufacturing processes, improving the energy density of the positive and negative materials has become the focus at this stage.

During the rapid development of lithium ion batteries, in the industry's five development concepts of innovation, coordination, greenness, openness, and sharing, domestic and foreign researchers have done a lot of researches on the hydration of lithium ion battery binders. Hydration products have already been largely promoted and researched, such as CN201410731027.8, CN200910300150.3, CN108598486A, etc.. However, with the development of ion battery cathode ternary materials, aqueous binders that can adapt to the pulping and coating processes in highly alkaline environments have become the key to matching ternary materials. However, the existing aqueous binders cannot adjust the pH of the slurry during use. During the storage of the slurry, the viscosity of the slurry will fluctuate with the change of the pH, affecting the consistency of plate coating. In addition, the current collector of the positive plate is aluminum foil. Aluminum foil is an amphoteric substance, that is, it will participate in the reaction under the condition of peracid or overalkali, and emit gas corroding the cathode current collector. However, the existing aqueous binders cannot satisfy lithium-ion batteries' requirements for the slurry.

### BRIEF DESCRIPTION OF THE INVENTION

In view of this, the present invention provides an aqueous binder, which is more suitable for ternary materials of lithium-ion batteries, and can stabilize or adjust the pH value of the ternary material slurry of lithium-ion batteries, and can be adapted to lithium-ion batteries with different nickel-cobalt-aluminum (NCA) and nickel-cobalt-manganese ratios.

The present invention provides an aqueous binder, prepared by the following method, which includes the following steps:
(1) under the action of protective gel, carboxyl-containing functional monomers, vinyl acetate monomers and acrylate monomers are mixed to perform stage I polymerization to form a stage I binder;
(2) after the stage I polymerization is completed, vinyl acetate monomers are added to perform stage II polymerization to form a stage II binder;
(3) after the stage II polymerization is completed, a pre-emulsion, which is formed in advance of carboxyl-containing functional monomers, vinyl acetate monomers and acrylate monomers, is added dropwise to react completely to form a stage III binder.

In a specific embodiment of the present invention, the binder is a three-stage copolymer, the stage II binder is a vinyl acetate polymer, and the stage I or stage III binder is a copolymer of carboxyl-containing functional monomers, acrylate monomers and vinyl acetate monomers.

In a specific embodiment of the present invention, the carboxyl-containing functional monomer is a compound containing carboxyl group and unsaturated bond.

In a specific embodiment of the present invention, the carboxyl-containing functional monomer includes, but is not limited to, one or more of methacrylic acid, acrylic acid, maleic acid, itaconic acid, maleic anhydride, and the like which are reactive monomers containing carboxyl group and unsaturated bond such as polymerizable double bond and triple bond.

In a specific embodiment of the present invention, the acrylate monomer includes, but is not limited to, one or more of soft monomers such as ethyl acrylate, butyl acrylate, n-octyl acrylate, isooctyl acrylate, dodecyl acrylate, lauryl acrylate, methacrylate polyethylene glycol monomethyl ether and allyl polyethylene glycol, and hard monomers such as methyl methacrylate, acrylonitrile, acrylamide, hydroxyethyl methacrylate, diacetone acrylamide, isobornyl acrylate and isobornyl methacrylate.

In a specific embodiment of the present invention, in the stage I or stage III binder, the mass ratio of the carboxyl-containing functional monomers is 5% to 50%. For example, the mass ratio of the carboxyl-containing functional monomers to the copolymer is 5%, 10%, 13%, 15%, 17%, 20%, 22%, 25%, 30%, 33%, 37%, 40%, 42%, 45%, 48%, 50%, etc.; preferably, the mass ratio of the carboxyl-containing functional monomers is 30% to 50%; and more preferably, the mass ratio of the carboxyl-containing functional monomers is 35% to 40%.

In a specific embodiment of the present invention, in the stage I or stage III binder, the mass ratio of vinyl acetate is 10% to 40%. For example, the mass ratio of vinyl acetate in the stage I or stage III binder is 10%, 12%, 14%, 16%, 19%, 21%, 25%, 28%, 30%, 33%, 35%, 38% or 40%. Preferably, the mass ratio of the vinyl acetate to the copolymer in the stage I or stage III binder is 14% to 30%; more preferably, the mass ratio of the vinyl acetate to the copolymer in the stage I or stage III binder is 19% to 25 %.

Another aspect of the present invention provides a method for preparing the above-mentioned aqueous binder, which comprises mixing carboxyl-containing functional monomers, vinyl acetate monomers, acrylate monomers, emulsifier, and initiator to perform polymerization under the action of protective gel.

In a specific embodiment of the present invention, the protective gel includes, but is not limited to, one or more of polyacrylamide, polyacrylate, polyvinyl alcohol, hydroxyethyl cellulose, or carboxymethyl cellulose.

In a specific embodiment of the present invention, the emulsifier is a compound of conventional emulsifier and reactive emulsifier.

In a specific embodiment of the present invention, the conventional emulsifier includes, but is not limited to, one or more of sodium lauryl sulfate, sodium dodecyl benzene sulfonate, sorbitan trioleate, propylene glycol monostearate, and polyoxyethylene oleyl ether, etc.; the reactive emulsifier includes, but is not limited to, one or more of sodium vinylsulfonate, methacrylic acid sulfonate, styrene sulfonate, 2-allyl ether 3-hydroxy propane-1-sulfonate, etc.

In a specific embodiment of the present invention, the initiator includes, but is not limited to, one or two of sodium persulfate, sodium bisulfite, potassium persulfate, ammonium persulfate, vitamins, benzoyl peroxide, azobisisobutyronitrile, AIBA, AIBI, etc.

In a specific embodiment of the present invention, the method for preparing the aqueous binder includes:
(1) under the action of protective gel, carboxyl-containing functional monomers, vinyl acetate monomers, and acrylate monomers are subjected to stage I polymerization under the action of an emulsifier; the reaction temperature is 40°C to 80°C and the constant-temperature reaction time is 30 min to 480 min;
(2) after the stage I polymerization is completed, vinyl acetate monomers are added in proportion, with the reaction temperature of 40°C to 80°C and the constant-temperature reaction time of 30min to 240min;
(3) after the stage II polymerization is completed, a pre-emulsion, which is formed in advance by preparing carboxyl-containing functional monomers, vinyl acetate monomers and acrylate monomers under the action of an emulsifier, is added dropwise within 60min to 240min; then the temperature is increased to 60°C to 90°C; and a constant temperature reaction is performed until the reaction is completed.

In a specific embodiment of the present invention, the reaction temperature in step (1) or step (2) is 50°C to 70°C. Preferably, the reaction temperature is 60 °C to 70 °C, for example, the reaction temperature is 60°C, 65°C, 68°C, 70°C.

In a specific embodiment of the present invention, the reaction temperature in step (1) is 60°C to 80 °C. Preferably, the reaction temperature is 70°C to 80°C, for example, the reaction temperature is 70°C, 74°C, 78°C, 80°C.

Another aspect of the present invention provides the application of the above-mentioned aqueous binder for a ternary material of a lithium-ion battery.

The aqueous binder provided by the present invention has at least one of the following beneficial effects:
The invention provides an aqueous binder, which is a three-stage (tri-block) copolymer formed by stepwise preparation, which can adapt to the pulping and coating process in highly alkaline environments, can be applied to ternary materials of lithium-ion batteries, and can stabilize or adjust the pH value of the ternary material slurry of lithium-ion batteries, and has a wide market application value.

### DETAILED DESCRIPTION OF THE INVENTION

The technical solutions of the present invention will be clearly and completely described in combination with the embodiments of the present invention. Obviously, the described embodiments are merely some but not all of the embodiments of the present invention. Based on the embodiments of the present invention, all other embodiments obtained by a person of ordinary skilled in the art without involving any inventive work shall fall within the protection scope of the present invention.

### Example 1

In this example, 3 parts of polyacrylamide were dissolved in a reaction kettle. After the polyacrylamide was completely dissolved, 0.8 parts of sodium vinyl sulfonate, 30 parts of butyl acrylate, 15 parts of methacrylic acid, and 5 parts of vinyl acetate were sequentially added by weight. The temperature was increased to 68°C; 0.4 parts of ammonium persulfate solution was quickly added; and the reaction was performed for 240 minutes to obtain the stage I polymer. After the reaction was completed, 5 parts of vinyl acetate and 0.1 part of ammonium persulfate solution were quickly added while the temperature was maintained. The reaction was performed at a constant temperature of 68°C for 30 minutes. After the reaction was completed, a pre-emulsion was prepared by making 30 parts of butyl acrylate, 10 parts of vinyl acetate, 10 parts of methacrylic acid, and 0.3 part of sodium dodecyl benzene sulfonate contacted. The pre-emulsion and 0.3 parts of ammonium persulfate solution were slowly added dropwise over 240 min period; and the temperature was increased to 70°C and maintained for 240 minutes. The aqueous binder for the lithium-ion battery ternary material was obtained, whose binder viscosity was 13100±900mPa.S (Test conditions includes: 12rpm/25°C; BROOKFIELD VISCOMETER with the model number of DVS+) and solid content was 18%.

### Example 2

40g of the binder prepared in Example 1 and 85g of water were slowly stirred for 5min, and 4g of conductive agent Super P was added and stirred at high speed for 100min, and then 188g of positive electrode ternary material (NCA811) was added and stirred at high speed for 100min. The solid content of the obtained positive electrode ternary material slurry was 70% and the viscosity of it was 5000 cPs. The slurry was rested for 24 hours until the viscosity and pH thereof were at a stable state. An aluminum foil which was coated by the slurry had good appearance, without exposed foil or air bubbles. The viscosities and pH values of the slurry were shown in Table 1 below:

**Table 1 Changes of viscosities and pH values of slurry**

| time | 0h | 1h | 4h | 24h |
|---|---|---|---|---|
| Viscosity | 5000 | 6200 | 8800 | 9800 |
| pH | 8 | 8.8 | 9.6 | 10.4 |

Prepare positive electrode ternary material slurry by using PAA-based aqueous binder (commercially available) which was commonly used in the market for lithium-ion batteries: 40 g of PAA binder (the solid content was 15%) and 85g of water were slowly stirred for 5min, and 4g of conductive agent Super P was added and stirred at high speed for 100 min, and then 188 g of positive electrode ternary material (NCA811) was added and stirred at high speed for 100 min. The solid content of the obtained positive electrode ternary material slurry was 68% and the viscosity of it was 5000 cPs. The slurry was rested for 24 hours, during which its pH values were tested and shown in Table 2.

**Table 2 Changes of viscosities and pH values of PAA binder ternary material slurry**

| time | 0h | 1h | 4h | 24h |
|---|---|---|---|---|
| Viscosity | 5000 | 8200 | 10000 | 16800 |
| pH | 9.3 | 10 | 11.3 | 11.4 |

After being rested, the slurry was coated on an aluminum foil. The aluminum foil had gas generated and was seriously corroded. As shown in the comparison between Table 1 and Table 2, after being rested for 24 hours, the changes of viscosities and pH values of the slurry prepared by using the aqueous binder in Example 1 were obviously less conspicuous than those of commercially available PAA binders, which is significant. It can be seen that, compared with the mainstream PAA binders for positive aqueous binders of lithium-ion battery currently on the market, the aqueous binder prepared in Example 1 can significantly inhibit the pH change of the ternary material slurry, and can inhibit the increase of pH in a certain storage period.

### Example 3

In this example, 2 parts of sodium polyacrylate was dissolved in a reaction kettle. After the sodium polyacrylate was completely dissolved, 0.6 parts of 2-allyl ether 3-hydroxypropane-1-sulfonate, 30 parts of butyl acrylate, 10 parts of methylene succinic acid and 10 parts of vinyl acetate were sequentially added by weight. The temperature was increased to 70 °C , 0.5 parts of potassium persulfate solution was quickly added; and the reaction was performed for 200 minutes to obtain the stage I polymer. After the reaction was completed, 10 parts of vinyl acetate and 0.1 part of potassium persulfate solution were quickly added while the temperature was maintained. The reaction was performed at a constant temperature of 70 °C for 80 minutes. After the reaction was completed, a pre-emulsion was prepared by making 25 parts of butyl acrylate, 10 parts of vinyl acetate, 5 parts of methylene succinic acid and 0.3 parts of sodium octadecyl succinate contacted. The pre-emulsion and 0.3 parts of potassium persulfate solution were slowly added dropwise over 200 min period; and the temperature was increased to 74 °C and maintained for 200 minutes. The aqueous binder for the lithium-ion battery ternary material was obtained, whose binder viscosity was 11000±1000 mPa.S (the same test conditions as Example 1) and solid content was 15%.

### Example 4

40g of the binder prepared in Example 3 and 85g of water were slowly stirred for 5min, and 4g of conductive agent Super P was added and stirred at high speed for 100min, and then 188g of positive electrode ternary material (NCA811) was added and stirred at high speed for 100min. The solid content of the obtained positive electrode ternary material slurry was 66% and the viscosity of it was 5000 cPs. The slurry was rested for 24 hours until the viscosity and pH thereof were at a stable state. An aluminum foil which was coated by the slurry had good appearance, without exposed foil or air bubbles. The viscosities and pH values of the slurry were shown in Table 3 below:

**Table 3 Changes of viscosities and pH values of slurry**

| time | 0h | 1h | 4h | 24h |
|---|---|---|---|---|
| Viscosity | 5000 | 5800 | 7000 | 8100 |
| PH | 8.2 | 8.6 | 9 | 9.3 |

As shown in Table 3, comparing it with Table 2, it can be seen that after being rested for 24 hours, the changes of viscosities and pH values of the slurry prepared by using the aqueous binder in Example 3 were obviously less conspicuous than those of commercially available PAA binders, which is significant. compared with the mainstream PAA binders for positive aqueous binders of lithium-ion battery currently on the market, the aqueous binder prepared in Example 3 can significantly inhibit the pH change of the ternary material slurry, and can inhibit the increase of pH in a certain storage period.

The aqueous binder provided in the embodiments of the present application can contribute to the development of high energy density of lithium-ion batteries, such as the rapid development of NCA523, NCA811 and other ternary materials. The aqueous binder can adapt to ternary materials of lithium-ion batteries with different NCA ratios, can adjust the pH of aqueous ternary material slurry of lithium-ion batteries, and can adapt to the pulping and coating process in highly alkaline environments, and has broad application prospects.

The above description is only the preferred embodiments of the present invention and is not intended to limit the present invention.

## Claims

1. An aqueous binder, **characterized in that**, it is prepared by the method comprising the following steps:
(1) under the action of protective gel, carboxyl-containing functional monomers, vinyl acetate monomers and acrylate monomers are mixed to perform stage I polymerization to form a stage I binder;
(2) after the stage I polymerization is completed, vinyl acetate monomers are added to perform stage II polymerization to form a stage II binder;
(3) after the stage II polymerization is completed, a pre-emulsion, which is formed in advance of carboxyl-containing functional monomers, vinyl acetate monomers and acrylate monomers, is added dropwise to react completely to form a stage III binder.

2. The aqueous binder of claim 1, **characterized in that**, it is a three-stage copolymer, the stage II binder is a vinyl acetate polymer, and the stage I or stage III binder is a copolymer of carboxyl-containing functional monomers, acrylate monomers and vinyl acetate monomers.

3. The aqueous binder of claim 1, **characterized in that**, the carboxyl-containing functional monomer is a compound containing carboxyl group and unsaturated bond.

4. The aqueous binder of claim 2, **characterized in that**, the mass ratio of the carboxyl-containing functional monomers in the stage I or stage III binder is 5% to 50%.

5. The aqueous binder of claim 2, **characterized in that**, the mass ratio of vinyl acetate to the copolymer in the stage I or stage III binder is 10% to 40%.

6. The aqueous binder of any one of claims 1 to 5, **characterized in that**, the carboxyl-containing functional monomer is at least one of methacrylic acid, acrylic acid, maleic acid, itaconic acid, or maleic anhydrides.

7. The aqueous binder of claim 1, **characterized in that**, the acrylate monomer is at least one of ethyl acrylate, butyl acrylate, n-octyl acrylate, isooctyl acrylate, dodecyl acrylate, lauryl acrylate, methacrylate polyethylene glycol monomethyl ether, allyl polyethylene glycol, methyl methacrylate, or hydroxyethyl methacrylate.

8. A method for preparing the aqueous binder of any one of claims 1 to 7, **characterized in** comprising:
(1) under the action of protective gel, carboxyl-containing functional monomers, vinyl acetate monomers, and acrylate monomers are mixed to perform stage I polymerization;
(2) after the stage I polymerization is completed, vinyl acetate monomers are added to perform stage II polymerization;
(3) after the stage II polymerization is completed, a pre-emulsion, which is formed in advance by preparing carboxyl-containing functional monomers, vinyl acetate monomers and acrylate monomers, is added to make reaction complete.

9. The method of claim 8, **characterized in that**, wherein the protective gel comprises but is not limited to one or more of polyacrylamide, polyacrylate, polyvinyl alcohol, hydroxyethyl cellulose, or carboxymethyl cellulose.

10. The use of the aqueous binder of any one of claims 1 to 7, or the aqueous binder prepared according to claim 8 or 9 in a ternary material of a lithium-ion battery.

## Patentansprüche

1. Wässriges Bindemittel, **dadurch gekennzeichnet, dass** es durch das Verfahren hergestellt wird, das die folgenden Schritte umfasst:
(1) unter der Wirkung von Schutzgel werden carboxylhaltige funktionelle Monomere, Vinylacetatmonomere und Acrylatmonomere gemischt, um Polymerisation der Stufe I durchzuführen, um ein Bindemittel der Stufe I zu bilden;
(2) nachdem die Polymerisation der Stufe I abgeschlossen ist, werden Vinylacetatmonomere hinzugefügt, um Polymerisation der Stufe II durchzuführen, um ein Bindemittel der Stufe II zu bilden;
(3) nachdem die Polymerisation der Stufe II abgeschlossen ist, wird eine Voremulsion, die im Voraus aus carboxylhaltigen funktionellen Monomeren, Vinylacetatmonomeren und Acrylatmonomeren gebildet wird, tropfenweise hinzugefügt, um vollständig zu reagieren, um ein Bindemittel der Stufe III zu bilden.

2. Wässriges Bindemittel nach Anspruch 1, **dadurch gekennzeichnet, dass** es ein dreistufiges Copolymer ist, das Bindemittel der Stufe II ein Vinylacetatpolymer ist und das Bindemittel der Stufe I oder der Stufe III ein Copolymer aus carboxylhaltigen funktionellen Monomeren, Acrylatmonomeren und Vinylacetatmonomeren ist.

3. Wässriges Bindemittel nach Anspruch 1, **dadurch gekennzeichnet, dass** das carboxylhaltige funktionelle Monomer eine Verbindung ist, die Carboxylgruppe und ungesättigte Bindung enthält.

4. Wässriges Bindemittel nach Anspruch 2, **dadurch gekennzeichnet, dass** das Massenverhältnis der carboxylhaltigen funktionellen Monomere in dem Bindemittel der Stufe I oder Stufe III 5 % bis 50 % ist.

5. Wässriges Bindemittel nach Anspruch 2, **dadurch gekennzeichnet, dass** das Massenverhältnis von Vinylacetat zu dem Copolymer in dem Bindemittel der Stufe I oder III 10 % bis 40 % ist.

6. Wässriges Bindemittel nach einem der Ansprüche 1 bis 5, **dadurch gekennzeichnet, dass** das carboxylhaltige funktionelle Monomer zumindest eines von Methacrylsäure, Acrylsäure, Maleinsäure, Itaconsäure oder Maleinsäureanhydriden ist.

7. Wässriges Bindemittel nach Anspruch 1, **dadurch gekennzeichnet, dass** das Acrylatmonomer zumindest eines von Ethylacrylat, Butylacrylat, n-Octylacrylat, Isooctylacrylat, Dodecylacrylat, Laurylacrylat, Methacrylatpolyethylenglykolmonomethylether, Allylpolyethylenglykol, Methylmethacrylat oder Hydroxyethylmethacrylat ist.

8. Verfahren zum Herstellen des wässrigen Bindemittels nach einem der Ansprüche 1 bis 7, **dadurch gekennzeichnet, dass** es Folgendes umfasst:
(1) unter der Wirkung von Schutzgel werden carboxylhaltige funktionelle Monomere, Vinylacetatmonomere und Acrylatmonomere gemischt, um Polymerisation der Stufe I durchzuführen;
(2) nachdem die Polymerisation der Stufe I abgeschlossen ist, werden Vinylacetatmonomere hinzugefügt, um Polymerisation der Stufe II durchzuführen;
(3) nachdem die Polymerisation der Stufe II abgeschlossen ist, wird eine Voremulsion, die im Voraus durch Herstellen von carboxylhaltigen funktionellen Monomeren, Vinylacetatmonomeren und Acrylatmonomeren gebildet wird, hinzugefügt, um die Reaktion abzuschließen.

9. Verfahren nach Anspruch 8, **dadurch gekennzeichnet, dass**, wobei das Schutzgel eines oder mehrere von Polyacrylamid, Polyacrylat, Polyvinylalkohol, Hydroxyethylcellulose oder Carboxymethylcellulose umfasst, aber nicht darauf beschränkt ist.

10. Verwendung des wässrigen Bindemittels nach einem der Ansprüche 1 bis 7 oder des wässrigen Bindemittels, das nach Anspruch 8 oder 9 hergestellt ist, in einem ternären Material einer Lithium-Ionen-Batterie.

## Revendications

1. Liant aqueux, **caractérisé en ce qu'**il est préparé par le procédé comprenant les étapes suivantes :
(1) sous l'action d'un gel protecteur, des monomères fonctionnels contenant un groupe carboxy, des monomères d'acétate de vinyle et des monomères d'acrylate sont mélangés pour effectuer une polymérisation de stade I de manière à former un liant de stade I ;
(2) une fois la polymérisation de stade I terminée, des monomères d'acétate de vinyle sont ajoutés pour effectuer une polymérisation de stade II de manière à former un liant de stade II ;
(3) une fois la polymérisation de stade II terminée, une pré-émulsion, qui est formée à l'avance de monomères fonctionnels contenant un groupe carboxy, de monomères d'acétate de vinyle et de monomères d'acrylate, est ajoutée goutte à goutte pour réagir complètement de manière à former un liant de stade III.

2. Liant aqueux selon la revendication 1, **caractérisé en ce qu'**il s'agit d'un copolymère de stade trois, le liant de stade II est un polymère d'acétate de vinyle, et le liant de stade I ou de stade III est un copolymère de monomères fonctionnels contenant un groupe carboxy, de monomères d'acrylate et de monomères d'acétate de vinyle.

3. Liant aqueux selon la revendication 1, **caractérisé en ce que** le monomère fonctionnel contenant un groupe carboxy est un composé contenant un groupe carboxy et une liaison insaturée.

4. Liant aqueux selon la revendication 2, **caractérisé en ce que** le rapport massique des monomères fonctionnels contenant un groupe carboxy dans le liant de stade I ou de stade III est de 5 % à 50 %.

5. Liant aqueux selon la revendication 2, **caractérisé en ce que** le rapport massique de l'acétate de vinyle au copolymère dans le liant de stade I ou de stade III est de 10 % à 40 %.

6. Liant aqueux selon l'une quelconque des revendications 1 à 5, **caractérisé en ce que** le monomère fonctionnel contenant un groupe carboxy est au moins l'un parmi l'acide méthacrylique, l'acide acrylique, l'acide maléique, l'acide itaconique ou les anhydrides maléiques.

7. Liant aqueux selon la revendication 1, **caractérisé en ce que** le monomère d'acrylate est au moins l'un parmi l'acrylate d'éthyle, l'acrylate de butyle, l'acrylate de n-octyle, l'acrylate d'isooctyle, l'acrylate de dodécyle, l'acrylate de lauryle, le méthacrylate d'éther monométhylique de polyéthylène glycol, l'allyle de polyéthylène glycol, le méthacrylate de méthyle ou le méthacrylate d'hydroxyéthyle.

8. Procédé de préparation du liant aqueux selon l'une quelconque des revendications 1 à 7, **caractérisé en ce qu'**il comprend :
(1) sous l'action d'un gel protecteur, des monomères fonctionnels contenant un groupe carboxy, des monomères d'acétate de vinyle et des monomères d'acrylate sont mélangés pour effectuer la polymérisation de stade I ;
(2) une fois la polymérisation de stade I terminée, des monomères d'acétate de vinyle sont ajoutés pour effectuer la polymérisation de stade II ;
(3) une fois la polymérisation de stade II terminée, une pré-émulsion, qui est formée à l'avance en préparant des monomères fonctionnels contenant un groupe carboxy, des monomères d'acétate de vinyle et des monomères d'acrylate, est ajoutée pour faire se terminer la réaction.

9. Procédé selon la revendication 8, **caractérisé en ce que** ledit gel protecteur comprend, sans s'y limiter, un ou plusieurs composés parmi le polyacrylamide, le polyacrylate, l'alcool polyvinylique, l'hydroxyéthylcellulose ou la carboxyméthylcellulose.

10. Utilisation du liant aqueux selon l'une quelconque des revendications 1 à 7, ou du liant aqueux préparé selon la revendication 8 ou 9 dans un matériau ternaire d'une batterie lithium-ion.
